# EUROPÄISCHE PATENTSCHRIFT

(11) **EP 3 409 438 B1**
(45) Veröffentlichungstag und Bekanntmachung des Hinweises auf die Patenterteilung: **01.04.2020**
(21) Anmeldenummer: 17000932.8
(22) Anmeldetag: 01.06.2017
(51) Int. Cl.: B29C 44/56, B29C 48/90, B29C 44/50, B29C 44/34

(54) **PLATTEN AUS KUNSTSTOFFSCHAUM MIT FOLIENBESCHICHTUNG**
PLATES MADE OF FOAMED PLASTIC MATERIAL WITH FILM COATING
PLAQUES EN MATIÈRE SYNTHÉTIQUE AYANT UNE COUCHE DE FILM

(43) Veröffentlichungstag der Anmeldung: 05.12.2018
(73) Patentinhaber: Jackon Insulation GmbH, 39619 Arendsee (DE)
(72) Erfinder: Stein, Trygsland, 3212 Sandefjord (NO)
(74) Vertreter: Kaewert, Klaus

(56) Entgegenhaltungen:
- DE-A1- 10 054 414
- DE-A1-102010 011 966
- US-A1- 2005 159 496
- US-A1- 2011 206 926

## Beschreibung

Die Erfindung betrifft Platten Kunststoff, insbesondere aus Thermoplasten und zu Bauzwecken. An solchen Platten ist die Beschichtung mit Folien, auch mit Aluminiumfolien bekannt.

Thermoplaste sind Kunststoffe, die unter Erwärmung erweichen und sich in dem Erweichungszustand verformen lassen und nach Abkühlung die erlangte Form behalten. Dieser Vorgang ist oft wiederholbar.
Zu den Thermoplasten zählen zum Beispiel: Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC).
Zu den Massenkunststoffen gehören Polystyrol und Polyolefine wie Polyethylen und Polypropylen.

Neben diesen oben aufgeführten reinen Polymeren, bestehend aus einem Polymer, gibt es auch Misch- oder Copolymere, die aus verschiedenen Monomeren aufgebaut sind, z.B. Acrylnitril-Butadien-Styrol (ABS).

Üblicherweise werden die Kunststoffe zusammen mit Additiven, Zuschlägen und Füllstoffen verarbeitet. Die Additive und Zuschläge sollen dem gewünschten Produkt bestimmte Eigenschaften geben; zum Beispiel erhöhte Festigkeit und/oder erhöhte Alterungsbeständigkeit und/oder erhöhte Elastizität. Die Zuschläge können auch dazu dienen die Verarbeitung zu erleichtern.
Die Additive können andere Kunststoffe und vieles andere sein; zum Beispiel Fasern.
Die Füllstoffe dienen dazu, den Kunststoff zu strecken.

Der Kunststoff kommt in ungeschäumter Form und in geschäumter Form vor. Der ungeschäumte Kunststoff wird üblicherweise einer formgebenden Verarbeitung unterzogen.
Zur Herstellung von geschäumtem Kunststoff wird der Kunststoff verflüssigt und die Treibmittel in die Schmelze eingemischt und verteilt wird.
Dabei finden zumeist Extruder Anwendung. Im Extruder wird der Kunststoff in einen schmelzflüssigen Zustand gebracht und durch eine Düse ausgetragen, welche dem austretenden Kunststoff die gewünschte Form gibt.

Der Extruder kommt in verschiedenen Bauarten vor, besonders häufig als Einschneckenextruder. Dabei läuft in einem Gehäuse eine Schnecke um, welche den Kunststoff zur Extrusionsdüse transportiert.
Eine andere häufig vorkommende Bauart ist der Doppelschneckenextruder. Dabei sind zwei Schnecken in einem Gehäuse parallel zueinander vorgesehen, die entweder gleichsinnig oder gegenläufig rotieren.
Eine seltenere Bauart ist der Planetwalzenextruder, der aus einem innen verzahnten fest angeordneten Gehäuse, einer mittig umlaufenden Zentralspindel und verschiedenen Planetspindeln besteht, die zwischen dem Gehäuse und der Zentralspindel um die Zentralspindel umlaufen. Die Verzahnung der Planetspindeln kämmt mit der Verzahnung der Zentralspindel und der Innenverzahnung des Gehäuses.

Mit Hilfe von Extrudern kann auch Kunststoffschaum hergestellt werden.

Dabei wird die in dem Extruder entstehende Schmelze mit einem Treibmittel versetzt und homogenisiert. Das Treibmittel wird nach Entstehen der Schmelze aus dem Kunststoff als Flüssigkeit in den Extruder eingespritzt. Im Extruder wird das Treibmittel mit der Schmelze vermischt.
Im Extruder verhindert der dort herrschende Druck eine Gasbildung und ein Aufschäumen des Kunststoffes. Die Gasbildung und das Aufschäumen erfolgen beim Austritt der Schmelze aus dem Extruder in eine Atmosphäre geringeren Druckes (zumeist Umgebungsdruck).
Durch das Aufschäumen entsteht eine große Vielzahl von Zellen in der Schmelze. Damit dabei möglichst kleine Zellen entstehen, ist es wichtig, daß der aufschäumende Schmelzestrang abgekühlt wird. Das Abkühlen wird in der Regel durch die Zustandsänderung des Treibgases und durch die Umgebungsluft bewirkt. Wo eine zusätzliche Kühlung erforderlich ist, kann dem mit einem Gebläse und/oder gekühlten Kalibratorplatten und/oder mit Wasser abgeholfen werden.

In der DE 10054414A1 zeigt die Herstellung von Polystyrolschaum unter Verwendung eines Extruders,
- wobei sich in dem Extruder eine Polystyrolschmelze befindet,
- ein flüssiges Treibmittel in den Extruder gespritzt wird,
- eine Vermischung mit der Schmelze und eine Homogenisierung der Schmelze stattfinden,
- die mit Treibmittel beladene Schmelze durch eine Düse des Extruders in einen Kalibrator ausgetragen wird,
- in dem die Schmelze aufgeschäumt wird und teilweise abkühlt, wobei der Innenraum des Kalibrators einen rechteckigen Querschnitt besitzt,
- so dass aus dem Kalibrator ein Schmelzestrang austritt,
- wobei ein Treibmittel verwendet wird,
- das mindestens teilweise große teilfluorierte Kohlenwasserstoff-Moleküle mit mindestens drei Kohlenstoffatomen und/oder ein teilfluoriertes Polyolefin aufweist.

Im Unterschied zu früheren Treibmitteln (voll- und teilfluoriertchlorierte Kohlenwasserstoffe) diffundieren die heutigen umweltfreundlicheren Treibmittel (Kohlendioxid und halogenfreien Lösemittel) innerhalb einiger Wochen aus dem hergestellten Kunststoffschaum aus. Der Kunststoffschaum fällt dadurch allerdings nicht zusammen, weil anstelle der Treibmittel die Umgebungsluft in den Schaum eindringt/eindiffundiert.
Dieser Vorgang kann erhebliche Auswirkungen auf die Beschaffenheit des Kunststoffschaumes haben. Kunststoffschaumplatten, insbesondere solche aus Polystyrol werden deshalb Monate gelagert, damit der Vorgang des Ausdiffundierens und Eindiffundierens weitgehend abgeschlossen ist, bevor die extrudierten Polystyrolschaumplatten (auch XPS-Platten genannt) in die Anwendung am Bau gelangen.

Die Erfindung möchte eine bessere Isolierung von Polystyrolschaumplatten erzeugen.
Das wird mit den Merkmalen des Hauptanspruches und in bevorzugten Ausführungsformen mit den Merkmalen der Unteransprüche erreicht.
Dabei wird ein Treibgas mit einer besseren Isolierungswirkung als Luft ausgewählt. Zugleich sollen die Moleküle des Treibgases möglichst groß sein. Groß in diesem Zusammenhang bedeutet, dass das Molekühl mindestens drei Kohlenstoffatom beinhaltet, also ein fluoriertes Derivat von Propan, Butan, Pentan usw. bzw. Propen, Buten, Pentan usw. ist. Zusätzlich oder anstelle der langkettigen Gasmoleküle können teilfluorierte Polyolefine zum Einsatz kommen. Die großen Moleküle haben größere Schwierigkeiten, aus dem Kunststoffschaum auszudiffundieren als kleine Moleküle.
Vorzugsweise sind die ausgewählten Treibmittel teilfluorierte Kohlenwasserstoffe (HFKW) oder teilfluorierte Olefine (HFO) oder Mischungen davon.
Nach der Erfindung wird ein Feuchtigkeitseintritt in die Polystyrolschaumplatte, in Form von Wasserdampf vermieden. Insbesondere kondensierender Wasserdampf erhöht den Lambdawert der Polystyrolschaumplatte.
Auf der anderen Seite ist ein geringer Feuchtigkeitsgehalt im Treibmittel beim Extrudieren von Vorteil. Nach der Erfindung wird der Feuchtigkeitsgehalt auf maximal 1Gew% bezogen auf die Einsatzmenge an Treibmittel, vorzugsweise auf maximal 0,7Gew%, noch weiter bevorzugt auf maximal 0,5Gew% und höchst bevorzugt auf maximal 0,3Gew% reduziert.

Zusätzlich ist eine Diffusionsbremse in Form einer Sperrfolie an der Außenfläche der Platten vorgesehen, welche das Ausdiffundieren des Treibgases hemmt. Die Beschichtung von Schaumkörpern mit einer gasdichten Folie ist aus der US2011/206926 A1 an sich bekannt. Eine Bearbeitung des Schaumkörpers ist nicht vorgesehen. Allerdings werden alle genannten Schaumkörper in einem geschlossenen Formhohlraum hergestellt. Parallel wird eine gasdichte Folie in dem Formhohlraum in eine Form gebracht, welche anschließend den Schaumkörper aufnehmen kann. Zur Aufnahme des Schaumkörpers wird der Formhohlraum mit der innen liegenden Folie wieder geöffnet.

Im Extremfall wird das Treibgas nach der Erfindung vollständig in der Kunststoffschaumplatte eingekapselt. Vorzugsweise wird der Diffusionswiderstand der Polystyrolschaumplatte durch die erfindungsgemäße Verwendung besonderer Treibmittel und Umhüllung mit einer Sperrfolie gegenüber einer herkömmlichen ohne diese Treibmittel und ohne Umhüllung hergestellte Polystyrolschaumplatte mindestens verdoppelt, noch weiter bevorzugt mindestens verdreifacht und höchst bevorzugt mindestens vervierfacht. Dabei bezieht sich der Vergleich auf das Diffusionsverhalten von Stickstoff (80 % der Luft) durch Polystyrol.

Je größer die Moleküle sind und je größer die Hindernisse sind, die einem Ausdiffundieren entgegen stehen, desto mehr verbleibt von dem Treibmittel als Isoliergas in dem Polystyrolschaum.

Gemäß der Erfindung werden Treibmittel verwendet, welche ganz oder teilweise aus teilfluorierten Olefinen (HFO) bestehen, wie sie in der WO 2008/121779 und in der DE 102010 011966 beschrieben sind. Der Vorteil der teilfluorierten Olefinen besteht in deren geringen negativen Einfluss auf die Umwelt. Sie besitzen kein Chlor, weshalb sie nicht Ozonschicht schädigend sind und weiter haben sie ein sehr geringen Treibhauspotential und eine geringen Wärmeleitfähigkeit, weshalb sie ideale Isoliergase sind.
Das HFO kann allein das Treibmittel bilden.

Erfindungsgemäß findet eine Auswahl statt aus:
1,1,1,3-tetrafluorpropen (HFO 1234ze)
3,3,3-Trifluorpropen (HFO 1343zf)
2,3,3,3-Tetrafluorpropen (HFO 1234yf)

Oder es finden Mischungen der vorstehend aufgezählten HFO Anwendung. Vorzugsweise soll das HFO darin mindestens einen Anteil von 5Gew% an der gesamten Treibmittelmenge, noch weiter bevorzugt mindestens 6Gew% an der gesamten Treibmittelmenge haben.

Vorzugsweise soll das HFO höchstens einen Anteil von 14Gew% an der gesamten Treibmittelmenge für die Extrusion, noch weiter bevorzugt höchstens 12Gew% und höchst bevorzugt höchstens 10Gew% an der gesamten Treibmittelmenge haben.

Vorzugsweise wird das HFO mit Co-Treibmitteln kombiniert. Außerdem trägt das HFO zur Verbesserung der Wärme-Isolierungswirkung des Schaumes bei. Die Isolierungswirkung wird mit Lambda beschrieben.
Es lassen sich nach Erfindung Lambda-Werte kleiner 30mW/mK und weiter bevorzugt kleiner 25 mW/mK und höchst bevorzugt kleiner/gleich 20 mW/mK erreichen.

Vorzugsweise werden die Co-Treibmittel aus folgender Gruppe von Treibmitteln ausgewählt:
Wasser in oben beschriebenem Umfang, Kohlendioxid, Alkohole, Ketone, Ether, Kohlenwasserstoffe und Mischungen davon

Noch weiter bevorzugt werden Wasser, Kohlendioxid und Ketone und/oder Ether mit folgenden Mengen zugemischt:
Kohlendioxid 0 bis 3Gew%, bevorzugt 0 bis 2 Gew%, bezogen auf die gesamte Einsatzmischung für die Extrusion
Aceton und/oder Dimethylether als Co-Treibmittel 0 bis 3 Gew%, bevorzugt 0 bis 2 Gew%, bezogen auf die gesamte Einsatzmischung für die Extrusion
wobei der Treibmittel insgesamt einen Anteil von 15Gew%, bezogen auf die gesamte Einsatzmischung für die Extrusion, vorzugsweise von 12Gew%, noch weiter bevorzugt von 10Gew%, bezogen auf die Einsatzmischung , nicht übersteigt.

Obige Treibmittelauswahl ist auch unabhängig von der Anwendung der Sperrfolie für die Herstellung von XPS von Vorteil.

Mit der Diffusionsbremse geht die Entwicklung zu den im Markt befindlichen Polystyrolschaumplatten einen entgegen gesetzten Entwicklungsweg. Die marktüblichen Polystyrolschaumplatten sind ausdrücklich diffusionsoffen ausgelegt. Das heißt, bei den marktüblichen Polystyrolschaumplatten ist eine Diffusionsbremse oder Diffusionssperre unerwünscht, da in den üblichen Polystyrolhartschaumanwendungen eine Wasserdampfdiffusionsoffenheit gefordert ist.

Vorzugsweise findet als Sperrfolie eine ungeschäumte PE oder PET-Folie oder Metallfolie Anwendung.
Als Metallfolie ist vorzugsweise eine Aluminiumfolie oder eine Folie aus Stahl vorgesehen. Die Metall- oder Kunststoff-Folie kann eine Dicke von kleiner/gleich 1mm, vorzugsweise eine Dicke von kleiner/gleich 0,5mm, noch weiter bevorzugt eine Dicke von kleiner/gleich 0,15mm und höchst bevorzugt kleiner/gleich 0,10mm aufweisen.
Die Folie kann auch eine Verbundfolie sein, die sowohl eine Metallschicht als auch zum Beispiel brandhemmende und/oder die Folie schützende und/oder verschweißbare Materialschicht besitzt.
Die Folie kann aufgeschweißt oder aufgeklebt oder in sonstiger Weise aufkaschiert werden.
Das Verschweißen setzt voraus, daß es sich um verschweißbare Flächen handelt, die angeschmolzen und anschließend gegeneinander gedrückt werden. Bei thermoplastischen Materialien mit gleicher Beschaffenheit ist in der Regel eine Verschweißbarkeit gegeben. Die Verschweißbarkeit ist in der Regel auch dann gegeben, wenn das Material an den zu verschweißenden Materialflächen teilweise die gleiche Beschaffenheit besitzt. Eine solche Beschaffenheit entsteht durch Mischung der unterschiedlichen Materialien, vorzugsweise durch Mischung im schmelzflüssigen Zustand der Materialien. Das geschieht wahlweise durch Aufgabe granulatförmiger Materialien in einen Extruder. In dem Extruder werden die Granulate aufgeschmolzen und in Mischung gebracht. Anschließend wird die Mischung wieder aus dem Extruder ausgetrangen.

Das Kleben ist nicht auf eine verschweißbare Fläche angewiesen.
Der Klebstoff entwickeln die Klebekräfte durch physikalische, manchmal auch durch chemische Wechselwirkung. Es handelt sich um Adhäsion Das Kleben setzt nur klebefähige Flächen voraus. Dabei stehen diverse handelsübliche Kleber für die Verbindung von XPS-Platten mit den genannten Sperrfolien zur Verfügung. Häufig benutzte Kleber sind die Heißkleber, die heiß auf die Klebeflächen aufgetragen werden und beim Erkalten die gewünschte Klebekraft entwickeln. Heißkleber können ganz oder teilweise aus Polymeren und/oder Harzen bestehen. Geeignete Polymere können zum Beispiel sein:
Polyamide, Polyethylene, amorphe Polyalphaolefine, Ethylenvinylaceta-Copolymere

Geeignete Harze können sein:
Kolphonium, Terpene, Kohlwasserstoffharze

Häufig benutzte Kleber sind zum Beispiel Polyurethan-Kleber. Polyurethan-Kleber lassen sich auch kalt verarbeiten.

Sehr häufig benutzte Kleber sind druckempfindliche Kleber wie sie von Klebebändern bekannt sind.

Allen Klebern ist gemeinsam, daß die Klebeflächen frei von Staub und Fett und Öl oder dergleichen sind.

Die Erfindung geht auch davon aus, daß es für die Bewahrung des Treibmittels als Isoliergas in dem Kunststoffschaum von Vorteil ist, wenn möglichst unmittelbar nach der Extrusion des Kunststoffschaumes eine Beschichtung des Kunststoffschaumes mit der Sperrfolie erfolgt.

Die übliche Herstellung von Polystyrolschaumplatten erfolgt dadurch, daß der Extruder die treibmittelbeladene und aufschäumende Polystyrolschmelze in einen Kalibrator aufgibt. Der Kalibrator besteht aus temperierten und eventuell mit Trennmittel (z.B. Teflonfolie) beschichteten Wänden, welche zwischen sich einen Hohlraum mit einem gewünschten Querschnitt bilden. Aufgabe des Kalibrators ist, den austretenden Extrusionsstrang an der Außenfläche zu begrenzen, so dass beim Austritt aus dem Kalibrator eine formgebende Außenhaut mit der gewünschten Dicke des Polystyrolschaumstranges entsteht, während das Innere noch weich ist. Mit fortschreitender Abkühlung verfestigt sich auch das Innere des Extrusionsstranges. Durch Ablängen des Stranges und dessen allseitige Bearbeitung entstehen handelsübliche XPS-Platten. Dabei steht die Kurzbezeichnung XPS für extrudierte Polystyrolschaumplatten.

Die Platten werden üblicherweise in unterschiedlichen Ausführungen angeboten, nämlich
- mit glatten Kanten, so daß die Platten eine eindeutige Quaderform entsteht
   oder
- mit Stufenfalz, so daß der Rand im Querschnitt gestuft ist. Die Stufen sind so angelegt, daß die Platten in allen Richtungen aneinander gelegt werden können und dabei mit ihrem gestuften Rand ineinander greifen bzw. über- und untereinandergreifen. Zum Verständnis solcher Randausbildung an einer einstückigen Platte kann man sich zwei Platten vorstellen, welche exzentrisch aufeinander gelegt werden, so daß ein Versatz entsteht, der in Bezug auf zwei Seiten gleich ist und in Bezug auf die verbleibenden Seiten auch gleich ist. Der Stufenfalz kann an einstückigen Platten mit einem Formfräser erzeugt werden.
   oder
- mit Nut und Feder, wobei an einem Platten-Rand ein Nut vorgesehen ist, in welche beim Aneinanderlegen der Platten der gegenüber liegende Platten-Rand mit einer Feder greift. Dabei besitzt jede Platte zwei Ränder mit einer Nut und zwei Ränder mit einer Feder. Zum Verständnis solcher Randausbildung an einer einstückigen Platte kann man sich drei Platten vorstellen, die so übereinander gelegt werden, daß die beiden äußeren Platten genau zentrisch übereinander liegen und die mittlere Platte exzentrisch zu den außen liegenden Platten angeordnet ist, so daß der Versatz der mittlere Platte in Bezug auf zwei Seiten gleich ist und in Bezug auf die verbleibenden Seiten auch gleich ist. Auch die Nut/Federausbildung am Rand wird an einer einstückigen Platte vorzugsweise mit einem Formfräser erzeugt.

Nach der Erfindung werden die Platten zumindest an den Breitseiten mit einer einstückigen Sperrfolie beschichtet. Die Breitseiten sind die großen Flächen einer quaderförmigen Platte, die Schmalseiten sind die schmalen Flächen am Rand einer quaderförmigen Platte. Die Sperrfolie kann dabei den Abmessungen der Breitseite angepaßt sein und genau auf den Breitseiten positioniert werden, so daß kein Überstand der Sperrfolie gegenüber der Breitseite besteht. Der Rand der Platten bleibt dann entweder offen oder wird wahlweise zusätzlich mit einer am Rand umlaufenden Folie beschichtet.

Wahlweise werden größere und umfaltbare Sperrfolien gewählt, die nach ihrer Verbindung mit der Breitseite einer Platte an den Rändern überstehen. Noch weiter bevorzugt besitzen solche umfaltbaren Sperrfolien eine Dicke von kleiner/gleich 0,1mm und höchst bevorzugt von kleiner/gleich 0,05mm.

Vorzugsweise ist eine Sperrfolie auch an der gegenüber liegenden Breitseite der Polystyrolschaumplatte vorgesehen.
Wenn beide Sperrfolien darüber hinaus soweit überstehen, daß sie beim Umfalten einander am Plattenrand an allen Seiten überlappen so entsteht eine geschlossene Sperrfolienhülle an der Kunststoffschaumplatte.

Üblicherweise haben die Kunststoffschaumplatten desselben Herstellers alle die gleiche Breite, bei einem Hersteller zum Beispiel 600mm. Zumeist weichen die Plattenbreiten anderer Hersteller davon nur wenig ab.
Die Plattendicken variieren sehr stark. Um eine geschlossene Hülle für eine Polystyrolschaumplatte mit glattem Rand/Kante mit zwei Sperrfolien zu erzeugen, kann ein Breitenmaß beider Sperrfolien vorgesehen sein, das gleich der Plattenbreite plus der Plattendicke plus einem Überlappungsmaß ist. Als Überlappungsmaß können mindestens 5mm ausreichen. Vorzugsweise ist ein größeres Überlappungsmaß von mindestens 10mm, noch weiter bevorzugt von mindestens 15mm und höchst bevorzugt von mindestens 20mm vorgesehen, soweit die Plattendicke größer ist.
Je nach Verfahren der Aufbringung kann das Überlappungsmaß variieren. Bei einer Verschweißung kann das Überlappungsmaß kleiner als bei einer Verklebung sein.

Es können auch unterschiedlich breite/lange Folien zum Einsatz kommen. Zum Beispiel kann die Folienbreite/Folienlänge der Folie für die eine Plattenseite auf die dünnste Plattendicke ausgelegt werden und die Folienbreite/Folienlänge der Folie für die andere Plattenseite um so Vieles breiter/länger ausgelegt sein, daß gleichwohl noch eine Überlappung der Folien stattfindet.

Die Folien können auch so ausgelegt sein, daß zumindest bei verschiedenen Plattendicken der Folienüberstand nicht zu einer Überlappung ausreicht. In dem Fall kann die Lücke mit einem Folienstreifen geschlossen werden. Vorzugsweise ist die Länge des Folienstreifens dann so bemessen, daß der Folienstreifen um den gesamten Plattenrand herumgeführt werden kann.
Eine Lücke zwischen den Sperrfolien kann aber auch gewollt sein und offen bleiben.

Bei Anwendung eines Klebers kann der Kleber auf die Sperrfolien und/oder auf die XPS-Platten aufgetragen werden. Von Vorteil sind ein Kleberauftrag und ein Folienauftrag auf den Extrusionsstrang vor dem Ablängen des Stranges zu Platten, vorzugsweise nach dem Entfernen der Extrusionshaut. Nach dem Kleberauftrag auf den Extrusionsstrang kann die Folie von einer Rolle gezogen und auf den Extrusionsstrang gedrückt werden. Die Folie ist dabei so bemessen, daß sie am Plattenrand übersteht, Der überstehende Rand wird mit Umlenkrollen um den Plattenrand gefaltet.
Von Vorteil ist, nacheinander Ober- und Unterseite mit der Folie zu beschichten. Dabei überlappen die Folienränder der später aufgebrachten Folie die Folienränder der zuerst aufgebrachten Folie am Plattenrand.
Nach Ablängen des folienbeschichteten Extrusionsstranges zu Platten, müssen die Platten für eine vollständige Umhüllung mit Folien nur noch an den Stirnflächen mit Folie beschichtet werden. Dazu eignen sich auch entsprechend breite Klebebänder.

Die Überlappung der Folien muß nicht zwingend am Plattenrand stattfinden. Die Überlappung der Folien kann auch auf einer Breitseite oder auf beiden Breitseiten der Platten stattfinden.

Bei quadratischen Polystyrolschaumplatten kann sowohl bei der Bemessung in Richtung einer Kante wie auch bei der Bemessung in Richtung einer angrenzenden anderen Kante von der Plattenbreite bzw. von der gleichen Plattenbreite gesprochen werden.
Bei länglichen Polystyrolschaumplatten muß bei der Bemessung in Längsrichtung der Platte von der Länge gesprochen werden. Für die Länge der zugehörigen Folien gelten die Ausführungen zur Breite entsprechend.

Wahlweise werden die Sperrfolien gleichzeitig oder kurz nacheinander auf die Kunststoffschaumplatte aufgebracht und jede Sperrfolie unmittelbar nach ihrem Aufbringen umgefaltet.

Bei ruhenden Platten kann das Umfalten durch bewegliche Faltarme/Klappen erfolgen. Es können auch Walzen verwendet werden, welche die Sperrfolie zugleich ausstreichen.
Bei bewegten Platten können sowohl bewegte als auch ortsfeste Faltelemente zum Einsatz kommen. Ortsfeste Faltelemente können Bügel und Schienen sein, die schräg zur Bewegungsrichtung der Platten stehen, so daß die Sperrfolien daran entlang streichen.

Die Folie kann einschichtig oder mehrschichtig sein.
Bei mehrschichtiger Folie kann die Folie plattenseitig eine Materialschicht besitzen, welche zumindest teilweise aus einem mit der Platte verschweißbaren Kunststoff besteht. Die verschweißbare Schicht kann als Haftvermittler bezeichnet werden.
Es kann sowohl eine thermische Verschweißung als auch eine chemische Verschweißung mit einem Lösungsmittel in Betracht kommen.

Wahlweise kann aber bereits nach der Düse im Kalibrator eine Verschweißung oder Verklebung des Extrusionsstranges mit der Folie beginnen.
Der in den Kalibrator eintretende Extrusionsstrang haftet dann von sich aus an der Sperrfolie. Die Haftung kann noch verbessert werden, wenn die Sperrfolie einen Haftvermittler aufweist.

Vorzugsweise wird nach der Erfindung an mindestens einer Breitseite, noch weiter bevorzugt an beiden Breitseiten des Kalibrators in den Kalibrator-Innenraum eine Sperrfolie gezogen. Höchst bevorzugt besitzt die Sperrfolie die End-Breite der gewünschten Polystyrolschaumplatte. Der Innenraum des Kalibrators ist breiter als die Sperrfolie bzw. die End-Breite der gewünschten Polystyrolschaumplatte, weil der Extrusionsstrang im Kalibrator noch an beiden Schmalseiten einen Rand bildet, der bei der späteren Bearbeitung des abgekühlten Extrusionsstranges abgetrennt werden muß. Ohne diesen Rand an den beiden Schmalseiten wäre kein ausreichendes Material gegeben, um die gewünschten Plattenbreiten zu erzielen.
Die Folie kann endlos von der Rolle gezogen und in den Kalibrator gezogen werden. Dort wird die Folie von dem austretenden Extrusionsstrang gegen die zugehörigen Innenseiten des Kalibrators gedrückt und mit dem Extrusionsstrang aus dem Kalibrator herausgeführt.
Zur Zuführung der Folie sind im Kalibrator Schlitze vorgesehen. Von Vorteil sind Schlitze, die mit geringer Neigung zur Horizontalen eines horizontal angeordneten Kalibrators in Extrusionsrichtung in den Innenraum des Kalibrators verlaufen.
Vorteilhafterweise gibt die Folie, insbesondere zwei Folien an den Breitseiten des Extrusionsstanges , diesem so viel Festigkeit, daß der Extrusionsstrang früher und leichter auf einem Rollgang transportiert werden kann.

In einem alternativen Prozess wird die Sperrfolie nach dem Kalibrator in einem weiteren Produktionsschritt auf die Ober- und Unterseite des Polystyrolschaumstrang aufgebracht. Dies kann durch Kleben oder Aufschweißen mit Hilfe beheizter Kalanderwalzen geschehen und kann entweder direkt auf die Extrusionshaut des Extrusionsstrangs geschehen, oder diese Extrusionshaut wird vor dem Aufbringen der Sperrfolie entfernt, um genauere Dickenmaße zu erhalten und/oder um die Haftung der Sperrfolie auf dem Schaumstrang zu verbessern.
Dabei lassen sich Dickentoleranzen von ± 2 mm, bevorzugt von ± 1 mm und weiter bevorzugt von ±0,5 mm ohne weiteres einhalten. Das ist gegenüber herkömmlichen XPS-Platten ein Vorteil.

Nach ausreichender Abkühlung des Extrusionsstranges kann dieser an den Rändern genauso bearbeitet werden wie bei der oben beschriebenen herkömmlichen Plattenherstellung. Bei der herkömmlichen Plattenherstellung findet eine allseitige Bearbeitung des Extrusionsstranges, auch an den Rändern statt. Je nach Wunsch entstehen bei herkömmlicher Bearbeitung glatte Ränder oder Ränder mit Stufenfalz oder Ränder mit Nut/Feder-Verbindung.

Die allseitige Bearbeitung des Extrusionsstranges kann auch in Abschnitten erfolgen, zum Beispiel zunächst an den Breitseiten zur Aufbringung der Folien auf die Breitseiten, dann erst an den Seiten des Extrusionsstranges. Bei dieser Folge von Bearbeitungsschritten kommt es zu einer Durchtrennung der Folien, wenn die Folien am Rand des Extrusionsstranges gegenüber dem gewünschten Endmaß der Platten überstehen. Die Sperrfolien lassen sich an den Sperrfolienränder mitsamt überstehendem Schaummaterial gut abtrennen. Das kann mit einem Messer geschehen. Aber auch eine Trennung mit herkömmlichen Werkzeugen wie bspw. einer Säge führt zu einwandfreien Schnittkanten im Bereich an der Folie.

Bei der Bearbeitung können glatte Ränder oder Ränder mit Stufenfalz und Rändern mit Nut/Feder-Verbindung entstehen. Zweckmäßiger Weise wird der mit der Bearbeitung anfallende Abfall aus Kunststoffschaum und Sperrfolie einer gesonderten Abfallbehandlung zugeführt.
Alternativ kann beim Ablängen mit einem Glühdraht gearbeitet werden.
Mit dem Glühdraht läßt sich die Profilierung eines gewünschten Stufenfalzes oder einer Nut/Federverbindung an der beim Ablängen vorgesehenen Trennstelle des Extrusionsstranges ohne nennenswerten Materialverlust darstellen. Der Glühdraht wird dabei entlang der Flächen des gewünschten Stufenfalzes oder Nut/Federverbindung bewegt.

Die an einer Breitseite oder an beiden Breitseiten beschichteten und abgelängten und bearbeiteten Extrusionsabschnitte werden so als Schaumplatten weiterverwendet oder zusätzlich an den Rändern mit einer Sperrfolie beschichtet und dann eingesetzt. Die Randbeschichtung geschieht wahlweise wie oben zu den Polystyrolschaumplatten beschrieben. Die dazu verwendete Sperrfolie kann umlaufend an dem Plattenrand angeordnet werden. Außerdem kann bei der Folienbeschichtung des Randes eine Überlappung einer am Plattenrand vorgesehenen Folie mit einer oder beiden an den Breitseiten angebrachten Folien herbeigeführt werden. Für die Überlappung ist eine entsprechend breitere umlaufende Folie vorgesehen.

In der Zeichnung ist ein Ausführungsbeispiel der Erfindung dargestellt.

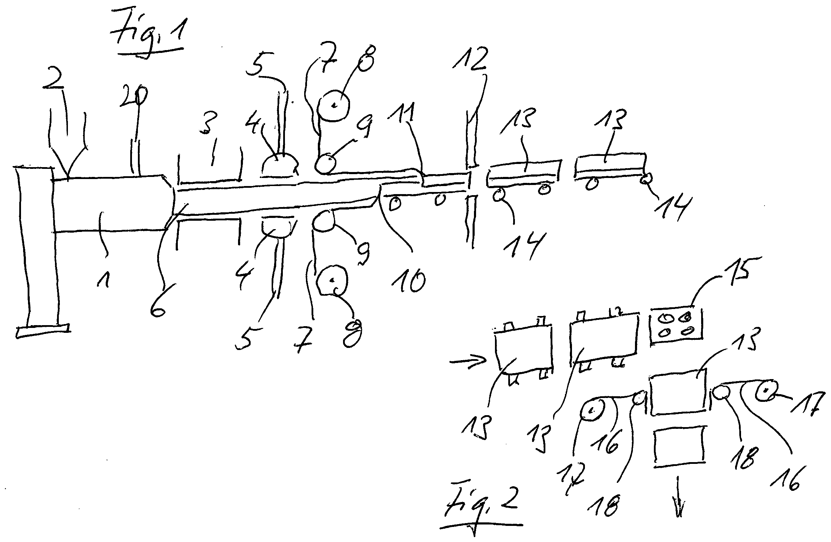

Fig. 1 zeigt eine schematische Verfahrenslinie mit einem Extruder 1 für die Herstellung von Polystyrolschaum mit einem Raumgewicht von 35 kg pro Kubikmeter. Die Einsatzstoffe für den Polystyrolschaum werden bei 2 in den Extruder aufgegeben. Dabei hat das Polystyrol eine Granulatform. Im Extruder 1 wird das Polystyrol aufgeschmolzen und mit den anderen Einsatzstoffen vermischt und homogenisiert werden. In die Schmelze wird bei 20 flüssiges Treibmittel eingespritzt, anschließend in der Schmelze dispergiert und mit der Schmelze aus dem Extruder 1 ausgetragen. Dabei gelangt die Schmelze unter den Einfluß der Umgebungsluft mit atmosphärischem Druck, der sehr viel geringer als der Schmelzedruck im Extruder ist. Infolge des Druckabfalls wandelt das flüssige Treibmittel seinen Aggregatzustand von flüssig in gasförmig. Es expandiert unter Vervielfachung des Volumens. In der Schmelze bilden sich viele Schaumblasen, die ein Merkmal des Schaumes sind.
Der aus dem Extruder 1 austretende Extrusionsschaumstrang 6 wird in einem Kalibrator 3 gekühlt. Der Kalibrator 3 bestimmt grob die Abmessungen des Extrusionsschaumstranges 6. In einem Abstand, in dem der Extrusionsschaumstrang 6 für eine Oberflächenbearbeitung ausreichend abgekühlt und verfestigt ist, erfolgt in einer Frässtation 4 eine allseitige Bearbeitung des Extrusionsschaumstranges. Dabei wird die sogenannte Extrusionshaut an der Oberfläche des Extrusionsschaumstranges entfernt und Dicke und Breite des Extrusionsschaumstranges auf ein gewünschtes Maß gebracht.
Die Frässtation 4 ist mit einer Absaugung 6 versehen, durch die der Frässtaub abgesaugt wird.
Dem folgt eine Beschichtungsstation. In der Beschichtungsstation werden dünne Alufolien 7 auf die Oberseite und die Unterseite des Extrusionsschaumstranges geklebt. Als Kleber findet ein Heißkleber Verwendung, dessen Anwendungstemperatur unterhalb der Erweichungstemperatur des Extrusionsschaumstranges 6 liegt. Der Kleber wird in nicht dargestellter Weise auf die Oberseite und Unterseite des Extrusionsschaumstranges 6 aufgesprüht, bevor die Alufolie 7 den Extrusionsschaumstrang 6 berührt.
Die Alufilie 7 wird von Vorratsrollen 8 gezogen und über Umlenkrollen 9 zugeführt.
Im Ausführungsbeispiel ist die Breite der Alufolie 7 so bemessen, daß die Alufolie nach dem Aufkleben beiderseits des Extrusionsschaumstranges 6 um ein Maß übersteht, das größer als die Halbe Dicke des Extrusionsschaumstranges 6 ist. Bei 10 werden die überstehenden Ränder der unteren Alufolie 7 umgefaltet und auf die vorher mit Kleber eingesprühte Schmalseiten des Extrusionsschaumstranges 6 umgefaltet. Das Umfalten erfolgt mit Führungsblechen.
Nachdem die überstehenden Ränder der unteren Alufolie 7 an den Schmalseiten des Extrusionsschaumstranges 6 verklebt worden sind, wiederholt sich der Vorgang bei 11 mit überstehenden Rändern der oberen Alufolie 7.
Danach ist der Extrusionsschaumstrang 6 allseitig in Alufolie eingeschlossen und werden in einer Schneidstation 12 von dem Extrusionsschaumstrang 6 Platten 13 abgelängt. Die Schneidstation 12 besitzt eine Säge.
Die abgelängten Platten 13 werden auf einem Rollgang 14 weitertransportiert, bis nach Fig. 2 eine Platte 15 mit Kugeln erreicht wird. Die Kugeln sind in allen Richtungen drehbeweglich, so daß die Platten 13 auf einen Rollgang aufgegeben werden können, dessen Förderrichtung quer zur Förderrichtung des Rollganges 14 verläuft. Auf dem neuen Rollgang durchlaufen die Platten 13 eine weitere Beschichtungsstation, in der mit die noch unbeschichteten Schnittflächen an den Platten 13 mit weiterer Alufolie 16 verschlossen werden. Die weitere Alufolie 16 wird wie zuvor von Vorratsrollen 17 abgezogen und den Platten 13 über Umlenkrollen zugeführt. Vor der Berührung mit der weiteren Alufolie 16 werden die Schnittflächen der Platten 13 wie bei der vorhergehenden Folienbeschichtung mit Kleber eingesprüht.
Danach sind die Platten 13 vollkommen eingeschlossen. Das in den Platten 13 befindliche Treibmittel kann nicht austreten, d.h. nicht durch die Alufolie in nennenswertem Umfang ausdiffundieren. Ohne die Alufolie würde das Treibmittel ausdiffundieren. Danach würde Umgebungsluft eindiffundieren. Allerdings ist die Isolierwirkung der Umgebungsluft um einiges schlechter als die der verwendeten Treibmittel.

## Patentansprüche

1. Herstellung von Polystyrolschaumplatten (13) unter Verwendung eines Extruders (1), wobei sich in dem Extruder (1) eine Polystyrolschmelze befindet, ein flüssiges Treibmittel in den Extruder (1) gespritzt wird,
eine Vermischung mit der Schmelze und eine Homogenisierung der Schmelze statt finden,
die mit Treibmittel beladene Schmelze durch eine Düse des Extruders (1) in einen Kalibrator (3) ausgetragen wird, in dem die Schmelze aufschäumt und teilweise abkühlt,
wobei der Innenraum des Kalibrators (3) einen rechteckigen Querschnitt besitzt, so daß aus dem Kalibrator (3) ein Schmelzestrang (6) austritt,
wobei Schmelzestrang (6) zu Platten (13) abgelängt wird,
wobei ein Treibmittel verwendet wird, das mindestens teilweise teilfluorierte Kohlenwasserstoff-Moleküle mit mindestens drei Kohlenstoffatomen aufweist, wobei das Treibmittel zumindest teilweise aus folgender Gruppe von Treibmitteln ausgewählt wird
- HFO1234ze
- HFO1343zf
- HFO1234yf
und die Platten (13) vollflächig mit einer Sperrfolie (7) beschichtet werden, die zumindest eine Diffusionsbremse für das Treibmittel bildet,
wobei
a)der Extrusionsstrang (6) an den Breitseiten bearbeitet wird, anschließend die bearbeiteten Breitseiten mit Sperrfolie(7) beschichtet werden,
danach die Schmalseiten bearbeitet und mit Sperrfolie(7) beschichtet werden,
danach der allseitig beschichtete Extrusionsstrang (6) zu Platten (13) abgelängt wird,
schließlich die noch unbeschichteten Schmalseiten der Platten(13) mit Sperrfolie(7) beschichtet werden
b)der Extrusionsstrang (6) allseitig bearbeitet wird und beide Breitseiten des Extrusionsstranges (6) mit einer Sperrfolie(7) beschichtet wird, die nach dem Beschichten an beiden Rändern gegenüber dem Extrusionsstrang (6) übersteht,
danach der überstehende Folienrand einer Sperrfolie (7) zur Teilbeschichtung der Schmalseiten des Extrusionsstranges (6) umgefaltet wird,
danach der überstehende Folienrand der anderen Sperrfolie (7) zu weiteren Beschichtung der Schmalseiten des Extrusionsstranges(6) umgefaltet wird,
wobei eine Überlappung der umgefalteten Folienränder auf den Schmalseiten stattfindet,
danach der allseitig beschichtete Extrusionsstrang (6) zu Platten (13) abgelängt wird,
schließlich die noch unbeschichteten Schmalseiten der Platten (13) mit Sperrfolie (7) beschichtet werden, oder
c)der Extrusionsstrang (6) allseitig bearbeitet wird und beide Breitseiten des Extrusionsstranges (6) mit einer Sperrfolie (7) beschichtet wird,
danach die Schmalseiten des Extrusionsstranges(6) mit Sperrfolie (7) beschichtet werden, wobei die Sperrfolie (7) auf den Schmalseiten nach oben und unten gegenüber dem Extrusionsstrang (6) übersteht, anschließend die überstehenden Folienränder über die Folie (7) an den Breitseiten umgefaltet wird.
danach der allseitig beschichtete Extrusionsstrang (6) zu Platten(13) abgelängt wird,
schließlich die noch unbeschichteten Schmalseiten der Platten (13) mit Sperrfolie (7) beschichtet werden

2. Verfahren nach Anspruch 1, **dadurch gekennzeichnet, daß** als Umhüllung eine faltbare Sperrfolie(7), vorzugsweise eine Alumuniumfolie und/oder PET-Folie, verwendet wird, wobei eine Sperrfolie (7) mit einer Dicke von kleiner oder gleich 0,5 mm verwendet wird.

3. Verfahren nach Anspruch 2, **dadurch gekennzeichnet, daß** eine Sperrfolie (7) mit einer Dicke von kleiner oder gleich 0,15mm verwendet wird.

4. Verfahren nach Anspruch 3, **dadurch gekennzeichnet, daß** eine Sperrfolie(7) mit einer Dicke von kleiner oder gleich 0,10 mm verwendet wird.

5. Verfahren nach einem der Ansprüche 1 bis 4, **gekennzeichnet durch** die Verwendung eines Heißklebers oder eines druckempfindlichen Klebers, auch eines Klebebandes.

6. Verfahren nach einem der Ansprüche 1 bis 5, **dadurch gekennzeichnet, daß** die Sperrfolien (7) mit einem Haftvermittler beschichtet sind.

7. Verfahren nach einem der Ansprüche 1 bis 6, **dadurch gekennzeichnet, dass** die Dicke der Polystyrolschaumplatte durch das Aufbringen der Sperrfolie (7) höchstens um ± 2 mm verändert wird.

8. Verfahren nach Anspruch 7, **dadurch gekennzeichnet, daß** die Dicke der Polystyrolschaumplatten um höchstens ± 1 mm verändert wird.

9. Verfahren nach Anspruch 7 oder 8, **dadurch gekennzeichnet, daß** die Dicke der Polystryrolschaumplatte um höchstens ± 0,5mm verändert wird.

10. Verfahren nach einem der Ansprüche 1 bis 10, **gekennzeichnet durch** die Verwendung von Treibmittel mit einem HFO-Anteil von mindesten 5Gew% und von höchstens 14Gew% der gesamten Treibmittelmenge.

11. Verfahren nach Anspruch 10 , **gekennzeichnet durch** die Verwendung von Treibmittel mit einem HFO-Anteil von mindestens 5Gew% und von höchstens 12Gew% der gesamten Treibmittelmenge.

12. Verfahren nach Anspruch 10 or 11, **gekennzeichnet durch** die Verwendung von Treibmittel mit einem HFO-Anteil von mindestens 6Gew% und von höchstens 10Gew% der gesamten Treibmittelmenge.

13. Verfahren nach einem der Ansprüche 1 und 8 bis 10, **gekennzeichnet durch** die Auswahl von Co-Treibmitteln aus folgender Gruppe von Treibmitteln
- Wasser, Kohlendioxid, Alkohole, Ketone, Ether, Kohlenwasserstoffe, wobei der Treibmittelanteil an der gesamten Einsatzmischung für die Extrusion maximal 15Gew% beträgt,
wobei der Anteil von Kohlendioxid bis 3Gew% beträgt, bezogen auf die gesamte Einsatzmischung für die Extrusion,
wobei der Anteil von Aceton oder Dimethyläther bis 3Gew% beträgt, bezogen auf die gesamte Einsatzmischung für die Extrusion,
wobei der Anteil an Wasser bis 1Gew% beträgt, bezogen auf die gesamte Treibmittelmenge.

14. Verfahren nach Anspruch 13, **dadurch gekennzeichnet, daß** der Treibmittelanteil an der gesamten Einsatzmischung für die Extrusion maximal 12Gew% beträgt.

15. Verfahren nach Anspruch 13 oder 14, **dadurch gekennzeichnet, daß** der Treibmittelanteil an der gesamten Einsatzmischung für die Einsatzmischun maximal 10Gew% beträgt.

## Claims

1. Production of polystyrene foam panels (13) by using an extruder (1), wherein a liquid blowing agent is injected into molten polystyrene in the extruder,
the blowing agent is blended into the melt and the melt is homogenised,
the melt, loaded with blowing agent, is discharged through a die of the extruder (1) into a calibrator (3), in which the melt foams up and partially cools down,
wherein the interior of the calibrator (3) has a rectangular cross section, such that an extruded melt strand (6) exits out of the calibrator (3),
wherein melt strand (6) is cut to length into panels (13),
wherein a blowing agent is used that possesses at least partially partly fluorinated hydrocarbon molecules containing at least three carbon atoms, wherein the blowing agent is at least partially selected from the following group of blowing agents
- HFO 1234ze
- HFO1343zf
- HFO1234yf
and the panels (13) are fully surface coated with a barrier film (7) that forms at least a diffusion inhibitor for the blowing agent,
wherein
a) the extruded strand (6) is treated on the broad sides, then the treated broad sides are coated with barrier film (7),
the narrow sides are then treated and coated with barrier film (7),
the extruded strand (6), coated on all sides, is then cut to length into panels (13),
finally, the still uncoated narrow sides of the panel (13) are coated with barrier film (7)
b) the extruded strand (6) is treated on all sides and both broad sides of the extruded strands (6) are coated with a barrier film (7) that after coating protrudes over both edges of the extruded strand (6),
the protruding film edge of one barrier film (7) is then folded back to partially coat the narrow sides of the extruded strand (6),
the protruding film edge of the other barrier film (7) is then folded back to further coat the narrow sides of the extruded strand (6), wherein the folded-back film edges overlap on the narrow sides,
the extruded strand (6), coated on all sides, is then cut to length into panels (13),
finally, the still uncoated narrow sides of the panel (13) are coated with barrier film (7), or
c) the extruded strand (6) is treated on all sides and both
broad sides of the extruded strand (6) are coated with a barrier film (7),
the narrow sides of the extruded strand (6) are then coated with barrier film (7), wherein the barrier film (7) on the narrow sides protrudes over and under the extruded strand (6);subsequently the protruding film edges are folded back over the film (7) on the broad sides,
the extruded strand (6), coated on all sides, is then cut to length into panels (13),
finally, the still uncoated narrow sides of the panel (13) are coated with barrier film (7).

2. Method according to claim 1, **characterised in that** a foldable barrier film (7), preferably an aluminium foil and/or a PET film, is used as the coating, wherein the thickness of the barrier film (7) that is used is less than or equal to 0.5 mm.

3. Method according to claim 2, **characterised in that** the thickness of the barrier film (7) that is used is less than or equal to 0.15 mm.

4. Method according to claim 3, **characterised in that** the thickness of the barrier film (7) that is used is less than or equal to 0.10 mm.

5. Method according to one of claims 1 to 4, **characterised by** the use of a hot melt adhesive or by a pressure sensitive adhesive, also by an adhesive tape.

6. Method according to one of claims 1 to 5, **characterised in that** the barrier films (7) are coated with an adhesion promoter.

7. Method according to one of claims 1 to 6, **characterised in that** the thickness of the polystyrene foam panel, due to the application of the barrier film (7), is modified by at most ± 2 mm.

8. Method according to claim 7, **characterised in that** the thickness of the polystyrene foam panel is modified by at most ± 1 mm.

9. Method according to claim 7 or 8, **characterised in that** the thickness of the polystyrene foam panel is modified by at most ± 0.5 mm.

10. Method according to one of claims 1 to 10, **characterised by** the use of blowing agents having an HFO content of at least 5 wt % and at most 14 wt % of the total amount of blowing agent.

11. Method according to claim 10, **characterised by** the use of blowing agents having an HFO content of at least 5 wt % and at most 12 wt % of the total amount of blowing agent.

12. Method according to claim 10 or 11, **characterised by** the use of blowing agents having an HFO content of at least 6 wt % and at most 10 wt % of the total amount of blowing agent.

13. Method according to one of claims 1 and 8 to 10, **characterised by** the selectionof co-blowing agents from the following groups of blowing agents
- water, carbon dioxide, alcohols, ketones, ethers, hydrocarbons, wherein the blowing agent content in the total employed mixture for the extrusion is maximum 15 wt %,
wherein the content of carbon dioxide is up to 3 wt %, based on the total employed mixture for the extrusion,
wherein the content of acetone or dimethyl ether is up to 3 wt %, based on the total employed mixture for the extrusion,
wherein the content of water is up to 1 wt %, based on the total amount of blowing agent.

14. Method according to claim 13, **characterised in that** the blowing agent content in the total employed mixture for the extrusion is maximum 12 wt %.

15. Method according to claim 13 or 14, **characterised in that** the blowing agent content in the total employed mixture for the extrusion is maximum 10 wt %.

## Revendications

1. Procédé de fabrication de plaques en mousse de polystyrène (13) en utilisant une extrudeuse (1), dans lequel une masse fondue de polystyrène se trouve dans l'extrudeuse (1),
un agent gonflant liquide est injecté dans l'extrudeuse (1),
un mélange avec la masse fondue et une homogénéisation de la masse fondue ont lieu,
la masse fondue chargée de l'agent gonflant est transférée par une buse de l'extrudeuse dans une calibreuse (3) dans lequel la masse fondue est expansée et partiellement refroidie,
dans lequel l'espace intérieur de la calibreuse (3) possède une section rectangulaire, de sorte qu'une barre de masse fondue (6) sort de la calibreuse (3),
dans lequel la barre de masse fondue (6) est coupée en longueur sous forme de plaques (13),
dans lequel on utilise un agent gonflant qui possède des molécules d'hydrocarbure au moins partiellement fluorées avec au moins trois atomes d'hydrocarbure,
dans lequel l'agent gonflant est au moins partiellement choisi dans le groupe suivant d'agents gonflants
- HFO1234ze
- HFO1343zf
- HFO1234yf
et les plaques (13) sont recouvertes sur toute leur surface d'un film barrière (7) qui forme au moins un frein de diffusion pour l'agent gonflant,
dans lequel
a) la barre extrudée (6) est traitée sur les côtés larges, puis les côtés larges traités sont recouverts avec un film barrière (7),
après quoi les côtés étroits sont traités et recouverts avec un film barrière (7),
après quoi la barre extrudée recouverte(6) est coupée en longueur sous forme de plaques (13) et enfin les côtés étroits des plaques (13) non encore recouverts sont recouverts avec un film barrière (7),
b) la barre extrudée (6) est traitée sur tous les côtés et les deux côtés larges de la barre extrudée (6) sont recouverts avec un film barrière (7) qui, après le revêtement, dépasse de la barre extrudée (6) sur les deux côtés,
après quoi le bord d'un film barrière (7) qui dépasse est replié pour recouvrir partiellement les côtés étroits de la barre extrudée (6),
après quoi le bord de l'autre film barrière (7) qui dépasse est replié pour continuer à recouvrir les côtés étroits de la barre extrudée (6),
les bords repliés des films se chevauchant sur les côtés étroits,
après quoi la barre extrudée (6) recouverte sur tous les côtés est coupée en longueur sous forme de plaques (13)
et enfin les côtés étroits des plaques (13) non encore recouverts sont recouverts avec un film barrière (7), ou
c) la barre extrudée (6) est traitée sur tous les côtés et les deux côtés larges de la barre extrudée (6) sont recouverts avec un film barrière (7),
après quoi les côtés étroits de la barre extrudée (6) sont recouverts avec un film barrière (7), le film barrière (7) dépassant la barre extrudée (6) vers le haut et vers le bas sur les côtés étroits , après quoi les bords qui dépassent du film (7) sont repliés sur les côtés larges,
après quoi la barre extrudée (6) recouverte sur tous les côtés est coupée en longueur sous forme de plaques (13)
et enfin les côtés étroits des plaques (13) non encore recouverts sont recouverts avec un film barrière (7).

2. Procédé selon la revendication 1, **caractérisé en ce qu'**en guise d'enveloppe on utilise un film barrière pliable (7), de préférence une feuille d'aluminium et/ou une feuille de PET, d'une épaisseur inférieure ou égale à 0,5 mm.

3. Procédé selon la revendication 2, **caractérisé en ce qu'**on utilise un film barrière (7) d'une épaisseur inférieure ou égale à 0,15 mm.

4. Procédé selon la revendication 3, **caractérisé en ce qu'**on utilise un film barrière (7) d'une épaisseur inférieure ou égale à 0,10 mm.

5. Procédé selon une des revendications 1 à 4, **caractérisé par** l'utilisation d'une colle à chaud, d'une colle sensible à la pression ou encore d'un ruban adhésif.

6. Procédé selon une des revendications 1 à 5, **caractérisé en ce que** les films barrières (7) sont recouverts d'un agent adhésif.

7. Procédé selon une des revendications 1 à 6, **caractérisé en ce que** l'épaisseur de la plaque de mousse de polystyrène est modifiée par l'application du film barrière (7) de ± 2 mm maximum.

8. Procédé selon la revendication 7, **caractérisé en ce que** l'épaisseur des plaques de mousse de polystyrène est modifiée de ± 1 mm maximum.

9. Procédé selon la revendication 7 ou 8, **caractérisé en ce que** l'épaisseur de la plaque de mousse de polystyrène est modifiée de ± 0,5 mm maximum.

10. Procédé selon une des revendications 1 à 10, **caractérisé par** l'utilisation d'un agent gonflant ayant une teneur en HFO de 5% en poids minimum et de 14% en poids maximum par rapport à la quantité totale d'agent gonflant.

11. Procédé selon la revendication 10, **caractérisé par** l'utilisation d'un agent gonflant ayant une teneur en HFO de 5% en poids minimum et de 12% en poids maximum par rapport à la quantité totale d'agent gonflant.

12. Procédé selon la revendication 10 ou 11, **caractérisé par** l'utilisation d'un agent gonflant ayant une teneur en HFO de 6% en poids minimum et de 10% en poids maximum par rapport à la quantité totale d'agent gonflant.

13. Procédé selon une des revendications 1 et 8 à 10, **caractérisé par** le choix de co-agents gonflants parmi le groupe suivant d'agents gonflants : eau, dioxyde de carbone, alcools, cétones, éther et hydrocarbures,
dans lequel la proportion d'agent gonflant par rapport à la totalité du mélange de charge pour l'extrusion est de 15% en poids maximum,
dans lequel la proportion de dioxyde de carbone est de 3% en poids maximum par rapport à la totalité du mélange de charge,
dans lequel la proportion d'acétone ou d'éther diméthylique est de 3% en poids maximum par rapport à la totalité du mélange de charge pour l'extrusion et
dans lequel la proportion d'eau est de 1% en poids maximum par rapport à la quantité totale d'agent gonflant.

14. Procédé selon la revendication 13, **caractérisé en ce que** la proportion d'agent gonflant par rapport à la totalité du mélange de charge pour l'extrusion est de 12% en poids maximum.

15. Procédé selon la revendication 13 ou 14, **caractérisé en ce que** la proportion d'agent gonflant par rapport à la totalité du mélange de charge pour le mélange de charge est de 10% en poids maximum.
